# EUROPEAN PATENT APPLICATION

(11) **EP 3 594 878 A1**
(43) Date of publication of application: **15.01.2020**
(21) Application number: 18845524.0
(22) Date of filing: 09.08.2018
(51) Int. Cl.: G06Q 20/18, G06Q 20/38

(54) **SMART BROADCASTING METHOD AND APPARATUS**

(30) Priority: 15.08.2017 CN 201710697273
(71) Applicant: Alibaba Group Holding Limited, Grand Cayman (KY)
(72) Inventor: WANG, Linqing, Hangzhou Zhejiang 311121 (CN); ZHANG, Hong, Hangzhou Zhejiang 311121 (CN); YIN, Huanmi, Hangzhou Zhejiang 311121 (CN); ZHOU, Le, Hangzhou Zhejiang 311121 (CN); YAO, Sihai, Hangzhou Zhejiang 311121 (CN); LIN, Feng, Hangzhou Zhejiang 311121 (CN)
(74) Representative: Goddar, Heinz J.
(86) International application number: PCT/CN2018/099555
(87) International publication number: WO 2019/033979

(57) **Abstract**

The present specification discloses a smart broadcasting method and apparatus. The method includes the following: in response to a request for binding a broadcast device, binding a device identifier of the broadcast device included in the request to a user account; processing a payment request for the user account; and in response to determining that payment is completed, searching for the device identifier bound to the user account, and sending, based on the device identifier, a payment result to the broadcast device bound to the user account, so that the broadcast device outputs payment result audio.

## Description

### TECHNICAL FIELD

The present specification relates to the field of Internet technologies, and in particular, to a smart broadcasting method and apparatus.

### BACKGROUND

With the rapid development of Internet technologies, electronic transactions enter people's life. Online electronic transactions such as online transfer and online payment are gradually performed offline. For example, after purchasing an article or a service from a physical merchant, a user pays a bill over the Internet. In an offline electronic transaction scenario, a more timely and reliable transaction result feedback solution is needed.

### SUMMARY

In view of this, the present specification provides a smart broadcasting method and apparatus.

The present specification is implemented by using the following technical solutions.

A smart broadcasting method, including: in response to a request for binding a broadcast device, binding a device identifier of the broadcast device included in the request to a user account; processing a payment request for the user account; and in response to determining that is completed, searching for the device identifier bound to the user account, and sending, based on the device identifier, a payment result to the broadcast device bound to the user account, so that the broadcast device outputs payment result audio.

A smart broadcasting method, including: receiving a payment result for a user account sent by a payment system, where the payment result is sent after the payment system identifies a device bound to the user account; and outputting payment result audio.

A smart broadcasting apparatus, including: a device binding unit, configured to: in response to a request for binding a broadcast device, bind a device identifier of the broadcast device included in the request to a user account; a payment processing unit, configured to process a payment request for the user account; and an audio output unit, configured to: in response to determining that payment is completed, search for the device identifier bound to the user account, and send, based on the device identifier, a payment result to the broadcast device bound to the user account, so that the broadcast device outputs payment result audio.

A smart broadcasting apparatus, including: a processor; and a memory, configured to store a machine executable instruction.

By reading and executing the machine executable instruction that is stored in the memory and that corresponds to smart broadcasting logic, the processor is configured to: in response to a request for binding a broadcast device, bind a device identifier of the broadcast device included in the request to a user account; process a payment request for the user account; and in response to determining that payment is completed, search for the device identifier bound to the user account, and send, based on the device identifier, a payment result to the broadcast device bound to the user account, so that the broadcast device outputs payment result audio.

It can be seen from the previous description that the smart broadcasting device described in the present specification integrates the payment graphic code and a payment result broadcast function. The user can implement payment by scanning the payment graphic code on the device body, and the processing module of the smart broadcasting device can receive a trigger signal from a payment system by using the communications module, and output a payment result audio signal to the loudspeaker, to drive the loudspeaker to output payment result audio. As such, a payment result is broadcast in a timely and reliable way, thereby improving electronic payment experience. In addition, a branding effect of the payment system can be improved, which helps promote the payment system.

### BRIEF DESCRIPTION OF DRAWINGS

FIG. 1 is a schematic diagram illustrating a smart broadcasting device, according to an example implementation of the present specification;
FIG. 2 is a schematic diagram illustrating scanning of a payment graphic code on a smart broadcasting device, according to an example implementation of the present specification;
FIG. 3 is a schematic diagram illustrating another smart broadcasting device, according to an example implementation of the present specification;
FIG. 4 is a schematic flowchart illustrating binding of a smart broadcasting device, according to an example implementation of the present specification;
FIG. 5 is a schematic flowchart illustrating powering on a smart broadcasting device, according to an example implementation of the present specification;
FIG. 6 is a schematic diagram illustrating a procedure that a smart broadcasting device broadcasts payment result audio, according to an example implementation of the present specification;
FIG. 7 is a schematic structural diagram illustrating a smart broadcasting apparatus, according to an example implementation of the present specification; and
FIG. 8 is a block diagram illustrating a smart broadcasting apparatus, according to an example implementation of the present specification.

### DESCRIPTION OF IMPLEMENTATIONS

Example implementations are described in detail here, and implementations are presented in the accompanying drawings. When the following description relates to the accompanying drawings, unless specified otherwise, same numbers in different accompanying drawings represent same or similar elements. The implementations described in the following example implementations do not represent all implementations consistent with the present specification. On the contrary, the implementations are only examples of apparatuses and methods that are described in the appended claims in detail and consistent with some aspects of the present specification.

The terms used in the present specification are merely used for the purpose of describing specific implementations, and are not intended to limit the present specification. The terms "a" and "the" in singular forms used in the present specification and the appended claims are also intended to include plural forms, unless clarified in the context. It should be further understood that the term "and/or" used in the present specification indicates and includes any or all possible combinations of one or more related listed items.

It should be understood that although terms such as first, second, third, etc. can be used in the present specification to describe various types of information, the information is not limited to these terms. These terms are only used to differentiate information of a same type. For example, within the range of the present specification, first information can also be referred to as second information. Similarly, the second information can also be referred to as the first information. Depending on the context, for example, the word "if' used here can be explained as "while", "when", or "in response to determining".

The present specification provides a smart broadcasting solution that can be implemented through cooperation between a payment system and a smart broadcasting device. The payment system is usually a server or a server cluster deployed by a payment service provider. The smart broadcasting device has an audio broadcast function.

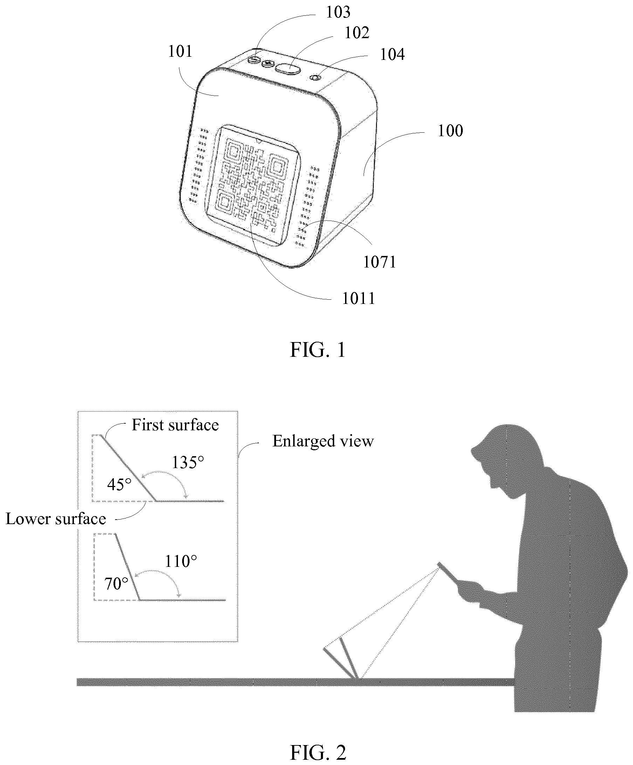

FIG. 1 is a schematic diagram illustrating a smart broadcasting device, according to an example implementation of the present specification.

Referring to FIG. 1, the smart broadcasting device includes a device body 100, and the device body 100 includes a first surface 101 including a payment graphic code 1011. The payment graphic code 1011 can include identification information of an account of a service provider. For example, the payment graphic code 1011 can include an identifier of a merchant account, and a user can scan the payment graphic code 1011 for payment. Alternatively, the payment graphic code 1011 can include a random code, and a merchant can bind the payment graphic code 1011 to an account of the merchant. Next users can scan the payment graphic code 1011 for payment. Implementations are not limited in the present specification.

In an example, a coding layer of the payment graphic code 1011 can be stuck to the first surface 101. For example, the merchant prints the payment graphic code including merchant account information, and then sticks the payment graphic code to the first surface 101.

In another example, the first surface 101 can include a display screen (not shown in the figure), configured to display the payment graphic code 1011. For example, after the smart broadcasting device is bound to the merchant account, a payment system can send information related to the merchant account to the smart broadcasting device, and the smart broadcasting device can display the payment graphic code 1011 including the information about the merchant account on the display screen.

Certainly, in practice, the payment graphic code 1011 can be included in other methods. Implementations are not limited in the present specification.

In the present implementation, to help a user scan the payment graphic code 1011, an included angle between the first surface 101 and a lower surface of the device body can be set to be less than 90 degrees. Referring to FIG. 2, because height of a common desktop usually ranges from 70 cm to 1 m, to adapt to a posture of using an end-user device such as a mobile phone when the user stands, the included angle between the first surface 101 and the lower surface of the device body can be set from 20 degrees to 70 degrees to help the user scan the payment graphic code 1011, and the user does not need to excessively adjust the posture of holding the mobile phone. As such, user experience can be improved.

Referring back to FIG. 1, the device body 100 of the smart broadcasting device can be further provided with a power key (main control key) 102, a volume adjustment key 103, an LED status indicator 104, a USB interface (not shown in the figure), a power cable (not shown in the figure), etc. There are usually two volume adjustment keys 103: One key is configured to turn up the volume, and the other key is configured to turn down the volume. The USB interface can be located on a second surface (not shown in the figure) on the device body 100 opposite to the first surface 101 to output power for charging the end-user device such as the mobile phone. For example, the USB interface outputs power of 5V/1A. The power cable can be used to connect to an alternating current of 220V, etc.

Alternatively, the power key 102, the volume adjustment key 103, and the LED status indicator 104 can be installed at another location on the device body 100. Implementations are not limited in the present specification.

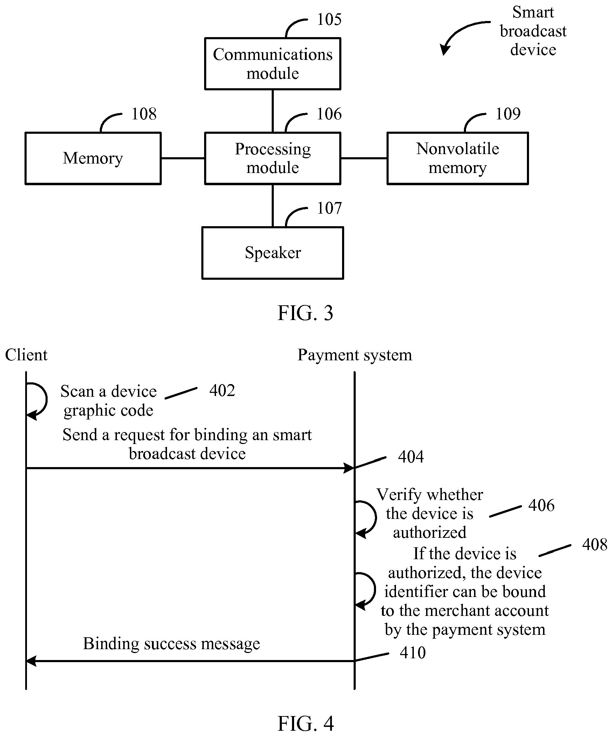

FIG. 3 is a schematic diagram illustrating another smart broadcasting device, according to an example implementation of the present specification.

Based on the implementation shown in FIG. 1, referring to FIG. 3, the smart broadcasting device can further include a communications module 105. The communications module 105 is installed inside the device body 100, and can communicate with outside by using a wireless and/or wired link. For example, the communications module 105 can be a Wi-Fi module, and can communicate with outside by using a Wi-Fi technology. For another example, the communications module 105 can be a Bluetooth module, and can communicate with outside by using a Bluetooth technology. Certainly, the communications module 105 can also be used as a general term of a module having a communication function, such as the Wi-Fi module and the Bluetooth module. Implementations are not limited in the present specification.

The smart broadcasting device further includes a processing module 106. The processing module 106 is installed inside the device body 100, and can be electrically connected to the communications module 105. The processing module 106 can be a micro control unit (MCU), a CPU, a field-programmable gate array (FPGA), etc. Implementations are not limited in the present specification.

The smart broadcasting device can further include a speaker 107. The speaker 107 can be installed inside the device body 100, and can be electrically connected to the processing module 106. In an example, referring back to FIG. 1, speaker holes 1071 of the speaker 107 can be distributed on left and right sides of the payment graphic code 1011 on the first surface 101. Certainly, the speaker holes 1071 of the speaker 107 can be alternatively distributed at another location of the device body 100. Implementations are not limited in the present specification.

The smart broadcasting device can further include a memory 108, a nonvolatile memory 109, etc. Implementations are not limited in the present specification.

In the present implementation, for example, when a service provider is a merchant, the merchant can bind the smart broadcasting device to a collection account of the merchant in advance. For example, the merchant can scan a device graphic code of the smart broadcasting device by using a client that logs in with the collection account; the client can obtain a unique hardware identifier of the device from the device graphic code through parsing, and then send a binding request including the hardware identifier and the collection account to a payment system; and the payment system stores a binding relationship between the hardware identifier and the collection account.

In the present implementation, after processing a payment request for the collection account, the payment system can send a trigger signal to the smart broadcasting device based on the hardware identifier bound to the collection account. The processing module 106 of the smart broadcasting device can receive the trigger signal from the payment system by using the communications module 105, and can further output a payment result audio signal to the speaker 107 to drive the speaker 107 to output payment result audio. For example, ** RMB is successfully received.

It can be seen from the previous description that the smart broadcasting device described in the present specification integrates the payment graphic code and a payment result broadcast function. The user can implement payment by scanning the payment graphic code on the device body, and the processing module of the smart broadcasting device can receive the trigger signal from the payment system by using the communications module, and output the payment result audio signal to the loudspeaker, to drive the loudspeaker to output the payment result audio. As such, a payment result is broadcast in a timely and reliable way, thereby improving electronic payment experience. In addition, a branding effect of the payment system can be improved, which helps promote the payment system.

The following uses an example that the service provider is a merchant, to describe a specific implementation process of the present specification separately in terms of network configuration of the smart broadcasting device, binding of the smart broadcasting device, power-on of the smart broadcasting device, and output of the payment result audio.

### 1. Network configuration of the smart broadcasting device

In the present implementation, before the merchant uses the smart broadcasting device, a network usually needs to be configured for the smart broadcasting device to enable the smart broadcasting device to access the Internet.

In the present implementation, the communications module 105 of the smart broadcasting device includes a Wi-Fi module, and the Wi-Fi module supports a STA (Station) mode and an AP (Access Point) mode.

After the smart broadcasting device is powered on, the merchant can switch the Wi-Fi module to the AP mode through triggering by a specified physical key. In the AP mode, the smart broadcasting device serves as an access point, and can be allowed to connect to an end-user device. The specified physical key can be set by a developer. To alleviate an unintentional touch, two physical keys can be installed, for example, a power key and a volume (-) key.

A mobile phone is used as an example. The merchant can simultaneously press the power key and the volume (-) key to switch the Wi-Fi module to the AP mode; then select a service set identifier (SSID) of the smart broadcasting device from a Wi-Fi list of the mobile phone; and enter a corresponding password, to establish a connection. The SSID and the corresponding password of the smart broadcasting device can be pre-printed on a device body 100, for example, pre-printed on a lower surface of the device body 100 or another position.

After the mobile phone successfully accesses Wi-Fi of the smart broadcasting device, the merchant can configure Wi-Fi connection information through the Wi-Fi connection, for example, an SSID and a password of a router. For example, after successfully accessing the Wi-Fi of the smart broadcasting device, a client can display a message that the smart broadcasting device is connected, and then the merchant can configure the SSID and password of the router for the smart broadcasting device by using the client.

After receiving the SSID and the password configured by the client, the smart broadcasting device can switch the Wi-Fi module to STA mode, and then access corresponding Wi-Fi network based on the configured SSID and password to access the Internet.

After accessing the Internet, the smart broadcasting device can establish a long connection to the payment system based on a preconfigured address of the payment system, to receive various types of information sent by the payment system.

Wherein, the address of the payment system is usually stored in the nonvolatile memory 109. A request packet for establishing a long connection is usually encapsulated by the processing module 106, and is usually sent and received by using the communications module 105.

An implementation procedure of each function is highlighted when each function of the smart broadcasting device is subsequently described in the present specification. For a process in which hardware modules of the smart broadcasting device cooperate to implement a corresponding function, references can be made to a related technology. Details are omitted in the present specification. For example, the processor 105 outputs an audio signal to a speaker, to drive the speaker to output a corresponding audio, and this can be described as outputting a corresponding audio by the smart broadcasting device.

In another example, when a network of the smart broadcasting device is configured, a Bluetooth connection can be first established to the smart broadcasting device, and then Wi-Fi connection information is sent by using the Bluetooth connection, so that the smart broadcasting device accesses the Internet. Implementations are not limited in the present specification.

### 2. Binding of the smart broadcasting device

In the present implementation, the device body 100 of the smart broadcasting device usually can further include a device graphic code (not shown in the figure). The device graphic code includes a device identifier of the device, such as a unique hardware identifier.

The device graphic code is usually used only when the merchant binds the smart broadcasting device. Therefore, the device graphic code can be provided on the lower surface of the device body 100. For example, the device graphic code is stuck to the lower surface of the device body. Certainly, the device graphic code can alternatively be provided at another location of the device body, for example, a surface opposite to the first surface 101. Forms of the device graphic code can be a bar code, a two-dimensional code, etc. Implementations are not limited in the present specification.

The merchant needs to bind the smart broadcasting device to the collection account of the merchant (which is referred to as a merchant account below) before using the smart broadcasting device.

In the present implementation, referring to FIG. 4, a process of binding the smart broadcasting device can include the following steps.

Step 402: The client scans a device graphic code on the smart broadcasting device.

A merchant can scan the device graphic code on the smart broadcasting device by using a client that logs in with a merchant account.

Step 404: The client sends, to the payment system, a request for binding the broadcast device.

After the scanning, the client can obtain a device identifier of the smart broadcasting device, and then the client can send, to the payment system, the request for binding the broadcast device. The request includes the device identifier and the merchant account, for example, identification information of the merchant account.

Step 406: The payment system verifies whether the smart broadcasting device is authorized.

After receiving the request for binding the broadcast device, the payment system can first verify, based on the device identifier, whether the corresponding smart broadcasting device is authorized.

For example, the payment system can verify whether the smart broadcasting device is authorized on a hardware platform that stores identifiers of authorized devices.

Certainly, the payment system can perform local verification if the payment system locally stores a list of identifiers of authorized devices. Implementations are not limited in the present specification.

In response to determining that the smart broadcasting device is unauthorized, the payment system can return a security prompt to the client to remind the merchant of a security risk.

Step 408: In response to determining that the smart broadcasting device is authorized, the payment system can bind the device identifier to the merchant account.

Step 410: The payment system returns a binding success message to the client.

In the present implementation, after binding the device identifier to the merchant account, the payment system can further check whether the corresponding smart broadcasting device is online, in other words, check whether the corresponding smart broadcasting device establishes a long connection to the payment system. In response to determining that the smart broadcasting device is online, the payment system can further send the binding success message to the smart broadcasting device, and the smart broadcasting device can further output an audio indicating that the user account is successfully bound.

The binding success audio can be a general audio, for example, an account is successfully bound. The binding success audio can further include information about the merchant account, for example, an A's account is successfully bound. The information about the merchant account is included in the binding success message sent by the payment system. Implementations are not limited in the present imp lementation.

In the present implementation, the merchant can view a status of the smart broadcasting device by using the client, for example, whether the smart broadcasting device is bound, and whether the bound smart broadcasting device is online. For processing and implementation of this part, references can be made to a related technology. Details are omitted in the present implementation.

In the present implementation, the merchant can further unbind the smart broadcasting device by using the client, for example, click an unbind button provided by a user page of the client; the client can further send an unbinding request to the payment system; and the payment system can further unbind the merchant account from the smart broadcasting device. After the unbinding, the payment system can further send an unbinding message to the corresponding smart broadcasting device, so that the smart broadcasting device outputs an unbinding prompt audio, for example, "unbinding succeeded".

Optionally, in another example, the payment system can further monitor whether the smart broadcasting device is at a security risk, automatically unbind the smart broadcasting device from the merchant account in response to determining that the smart broadcasting device is at a security risk, and send a prompt to the client to protect interests of the merchant.

In this example, the smart broadcasting device can periodically report device data of the device to the payment system. The device data can include an operating system version number, a speaker firmware number, etc. After receiving the device data, the payment system can determine, based on the device data, whether the smart broadcasting device is at a security risk. For example, the payment system can determine whether the operating system version number is the latest, whether the speaker firmware number is correct, etc. In response to determining that the operating system version number is the latest and the speaker firmware number is correct, the payment system can determine that the corresponding smart broadcasting device is not at a security risk; and in response to determining that the operating system version number is not the latest or the speaker firmware number is incorrect, the payment system can determine that the smart broadcasting device is at a security risk. Certainly, in practice, the device data can further include other information, and a method that the payment system determines whether the smart broadcasting device is at a security risk can be further extended based on the other information. Implementations are not limited in the present specification.

In this example, the payment system can confirm the security risk after receiving the device data. Or the payment system can first store the received device data, and then confirm the security risk offline when not busy. Implementations are not limited in the present specification.

### 3. Power-on of the smart broadcasting device

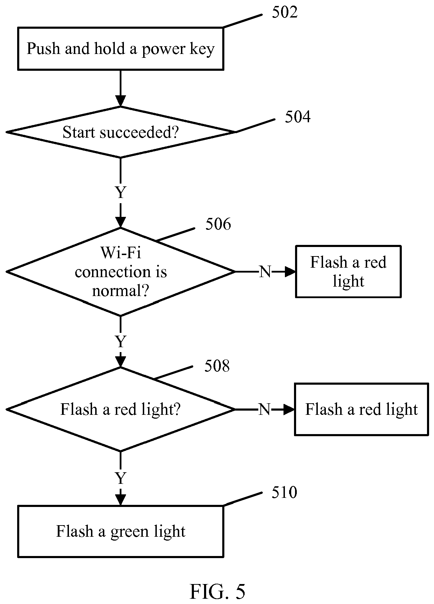

Referring to FIG. 5, a power-on procedure of the smart broadcasting device in the present implementation can include the following steps.

Step 502: Long press the power key.

In the present implementation, the power key 102 of the smart broadcasting device can be long pressed for power-on, for example, long pressed for three seconds.

Step 504: The smart broadcasting device determines whether start succeeds, and performs step 506 in response to determining that the start succeeds.

In the present implementation, in response to determining that the start fails, the smart broadcasting device can output a power-on failure sound.

Step 506: The smart broadcasting device detects whether a Wi-Fi connection is normal, and performs step 508 in response to determining that the Wi-Fi connection is normal.

In the present implementation, an LED status indicator flashes a red light when starts for the first time because Wi-Fi connection information is not configured.

In the present implementation, after the Wi-Fi connection information is configured, the smart broadcasting device can attempt to access a network based on the previously configured Wi-Fi connection information if the start succeeds, for example, attempt to access a router based on an SSID and a password of the router.

If the network is successfully connected, it can be determined that the Wi-Fi connection is normal, and step 508 is further performed.

If the network is unsuccessfully connected, the LED status indicator can be controlled to flash a red light to prompt a network access failure.

Step 508: The smart broadcasting device detects whether account binding is normal, and performs step 510 in response to determining that the account binding is normal.

According to step 506, the smart broadcasting device can establish a long connection to the payment system based on a stored address of the payment system if the Wi-Fi connection is normal, and can send a binding query request to the payment system after establishing the long connection, to query a binding status between the device and the merchant account. The binding query request can include the device identifier of the device.

After receiving the binding query request, the payment system can determine whether the smart broadcasting device is bound to the merchant account, and return a query result to the smart broadcasting device. The query result includes bound or unbound.

If the bound query result is received, it can be determined that the account binding is normal, and then step 510 is further performed.

If the unbound query result is received, it can be determined that the account binding is abnormal, and then the LED status indicator can be controlled to flash a red light for prompting. In response to determining, based on the LED status indicator, that the account binding is abnormal, the merchant can check by using the client, to resolve binding abnormality in time, thereby alleviating a problem that payment result audio cannot be broadcasted due to the binding abnormality.

Step 510: Control the LED status indicator to flash a green light.

Based on the detection result in step 508, if the account binding is normal, it indicates that the smart broadcasting device has entered a working state, so that the LED status indicator can flash a green light.

It is worthwhile to note that, in the present implementation, a light prompt that is output by the LED status indicator is only an example. In practice, another light prompt can be output. For example, the LED status indicator flashes a red light when the Wi-Fi connection is abnormal or when the account binding is abnormal. Implementations are not limited in the present specification.

### 4. Output of the payment result audio

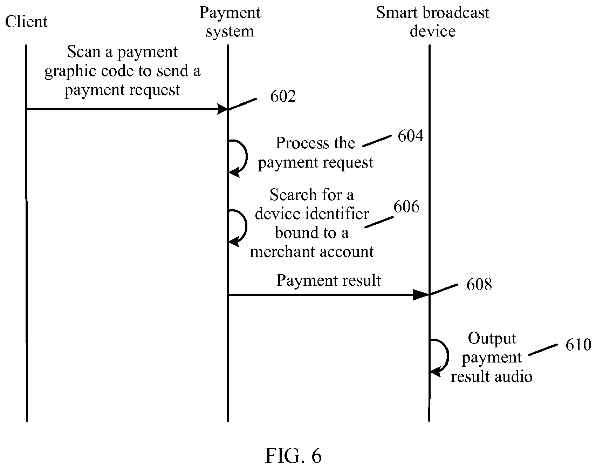

Referring to FIG. 6, the smart broadcasting device can broadcast the payment result audio by using the following steps.

Step 602: A user scans the payment graphic code included in the body of the smart broadcasting device.

In the present implementation, after the user performs consumption, the user can scan the payment graphic code such as a two-dimensional payment code included in the body of the smart broadcasting device by using a client loaded in the mobile phone.

After scanning the payment graphic code, the client can display a payment page for a merchant account, and the user pays based on the payment page, for example, enters a consumption amount and confirms the payment.

After the user confirms the payment, the client can send a payment request to the payment system. The payment request usually includes information such as a payment amount, the merchant account, and time.

Optionally, in another example, the smart broadcasting device can be further provided with a near field communication (NFC) module. In response to detecting an end-user device supporting an NFC technology, the NFC module can send information included in the payment graphic code to the end-user device by using the NFC technology. After receiving the information, the payment page for the merchant account can also be displayed for the user for payment. The information included in the payment graphic code can be sent by the payment system after the end-user device is bound to the merchant account.

In this example, the NFC module sends the information included in the payment graphic code, to effectively alleviate a scanning failure caused when the user does not align the payment graphic code during scanning, thereby improving a scanning success rate.

Optionally, in another example, the user can also pay by scanning a two-dimensional payment code provided by the merchant at another location. Implementations are not limited in the present specification.

Step 604: The payment system processes the payment request for the merchant account.

Step 606: After payment succeeds, the payment system searches for a device identifier of the smart broadcasting device bound to the merchant account.

Step 608: The payment system sends a payment result to the corresponding smart broadcasting device based on the identified device identifier.

Step 610: The smart broadcasting device outputs the payment result audio.

In an example, the payment result sent by the payment system can be payment result audio, and the smart broadcasting device can directly play the payment result audio after receiving the payment result audio.

In another example, because a data volume of the payment result audio is usually large, a relatively large bandwidth of the payment system can be occupied for transmitting the payment result audio, affecting performance of the payment system. Optionally, the payment result sent by the payment system can be a uniform resource locator (URL) of payment result audio. After receiving the URL sent by the payment system, the smart broadcasting device can obtain the corresponding payment result audio from a corresponding address based on the URL, and then play the corresponding payment result audio. Unlike the way in which payment result audio is directly sent, this solution improves performance of the payment system.

In another example, to occupy fewer network resources and improve payment result transmission efficiency, the smart broadcasting device can broadcast payment result audio in an audio combination way.

In detail, the smart broadcasting device can pre-save a basic audio in the payment result audio, for example, "successfully received" and "RMB". After payment succeeds, the payment result sent by the payment system to the smart broadcasting device can be a payment result parameter, for example, a specific amount paid by the user.

After receiving the payment result parameter, the smart broadcasting device can combine payment result audio based on the payment result parameter and the saved basic audio for broadcast.

For example, the user successfully paid 10 RMB. In this case, the payment system can send the payment result parameter 10, and after receiving the payment result parameter 10, the smart broadcasting device can obtain the basic audio "successfully received" and "RMB", and then combine the payment result audio "10 RMB is successfully received" for broadcast.

In another example, when payment fails, the payment system can also send a payment result to the corresponding smart broadcasting device, so that the smart broadcasting device outputs a corresponding payment result audio. Implementations are not limited in the present implementation.

It can be seen that after being bound to a merchant account, the smart broadcasting device provided in the present specification can broadcast payment result audio specific to the merchant account, so that staff of the merchant can hear a payment result in a timely way. Unlike a smart speaker, the smart broadcasting device is independent of an end-user device. When an end-user device that logs in with the merchant account is not in a store, for example, when a storekeeper leaves the store with a mobile phone, the staff of the merchant can also hear the payment result, to protect interests of the merchant. In addition, according to the smart broadcasting device provided in the present specification, a branding effect of the payment system can be improved, which helps promote the payment system.

In another example, a Wi-Fi probe module can be further installed in the smart broadcasting device, and can be configured to detect information about an end-user device, to assist the merchant in analyzing an operation status, for example, a passenger flow volume, the number of users, and the number of lost users.

In detail, the Wi-Fi probe module can report the detected information to the payment system. For example, the Wi-Fi probe module encapsulates the detected information according to a predetermined protocol, and then reports the detected information to the payment system. The detected information can include the number of end-user devices and device information of the end-user device, for example, a media access control (MAC) address.

After receiving the detected information, the payment system can perform user retention analysis, funnel analysis, etc. to assist the merchant in analyzing the operation status of the merchant, and can push an analysis result to the merchant.

Optionally, based on the Wi-Fi probe module, the payment system can further support the merchant in customizing audio push information.

For example, the merchant wants to carry out a promotion program that any user can get a coke for free if the user spends more than 50 RMB for purchased articles when there are 30 users in a store. The merchant can preset a push information audio and a push condition of the program by using the client. The push condition is that there are 30 users in the store, and the push information audio can be "any user can get a coke for free if the user spends more than 50 RMB for purchased articles".

Based on the previous configuration, after receiving the detected information reported by the smart broadcasting device, the payment system can determine whether the number of end-user devices that is included in the detected information reaches 30. If the number of end-user devices reaches 30, the payment system can determine that there are 30 users in the store, and then can send the push information audio configured by the merchant to the smart broadcasting device, for example, a URL of the push information audio, so that the smart broadcasting device broadcasts the push information audio.

In practice, the merchant can configure a plurality of push information audios and corresponding push conditions. Implementations are not limited in the present implementation.

Corresponding to the previous implementation of the smart broadcasting method, the present specification further provides an implementation of a smart broadcasting apparatus.

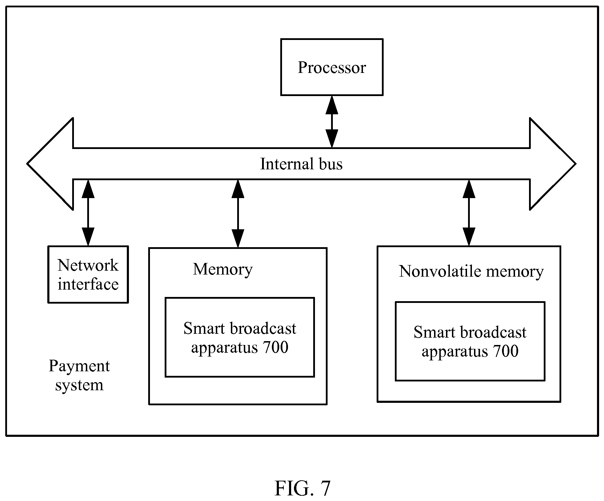

Implementations of the smart broadcasting apparatus in the present specification can be applied to the payment system. The apparatus implementation can be implemented by using software, hardware, or a combination of hardware and software. Software implementation is used as an example. As a logic apparatus, the apparatus is formed by reading a corresponding computer program instruction in a nonvolatile memory to a memory by a processor of the payment system that the apparatus is located in. In terms of hardware, FIG. 7 is a hardware structural diagram illustrating a payment system that a smart broadcasting apparatus is located in, according to the present specification. In addition to a processor, a memory, a network interface, and a nonvolatile memory shown in FIG. 7, the payment system that the apparatus in the present implementation is located in usually can include other hardware based on an actual function of the payment system. Details are omitted here for simplicity.

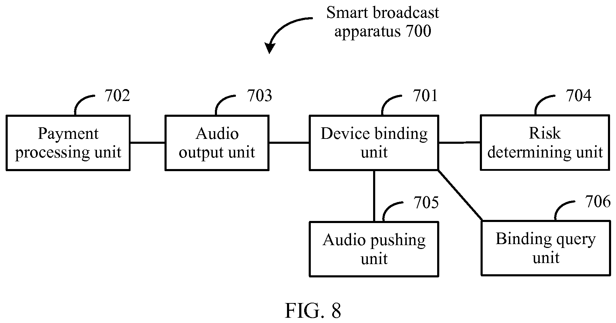

FIG. 8 is a block diagram illustrating a smart broadcasting apparatus, according to an example implementation of the present specification.

Referring to FIG. 8, the smart broadcasting apparatus 700 can be applied to the payment system shown in FIG. 7, and includes the following: a device binding unit 701, a payment processing unit 702, an audio output unit 703, a risk determining unit 704, an audio pushing unit 705, and a binding query unit 706.

The device binding unit 701 is configured to: in response to a request for binding a broadcast device, bind a device identifier of the broadcast device included in the request to a user account.

The payment processing unit 702 is configured to process a payment request for the user account.

The audio output unit 703 is configured to: in response to determining that payment is completed, search for the device identifier bound to the user account, and send, based on the device identifier, a payment result to the broadcast device bound to the user account, so that the broadcast device outputs payment result audio.

Optionally, the device binding unit 701 is further configured to verify, based on the device identifier, whether the broadcast device is authorized; and in response to determining that the broadcast device is authorized, bind the device identifier of the broadcast device included in the request to the user account.

The risk determining unit 704 is configured to receive device data reported by the broadcast device; determine, based on the device data, whether the broadcast device is at a security risk; and in response to determining that the broadcast device is at a security risk, unbind the broadcast device from the user account.

Optionally, the device data includes an operating system version number and a speaker firmware number.

The audio pushing unit 705 is configured to: receive detected information reported by the broadcast device, where the detected information is detected by the broadcast device based on a Wi-Fi probe technology; obtain a push condition corresponding to the user account bound to the broadcast device; and send a push information audio to the broadcast device in response to determining that the detected information corresponds to the push condition, so that the broadcast device outputs the push information audio.

Optionally, the detected information includes a quantity of end-user devices and device information of each end-user device.

The binding query unit 706 is configured to: in response to a binding query request sent after the broadcast device accesses a network, query whether the broadcast device is bound to the user account, and return a query result to the broadcast device, so that the broadcast device outputs a corresponding light prompt based on the query result.

The query result includes bound or unbound.

Optionally, the device binding unit 701 is configured to send a binding success message to the broadcast device after the device identifier of the broadcast device included in the request is bound to the user account, so that the broadcast device outputs an audio indicating that the user account is successfully bound.

For specific implementation processes of functions and roles of the units in the apparatus, references can be made to implementation processes of corresponding steps in the method. Details are omitted here for simplicity.

Because an apparatus implementation basically corresponds to a method implementation, for related parts, references can be made to related descriptions in the method implementation. The described apparatus implementation is merely an example. The units described as separate parts can or cannot be physically separate, and parts displayed as units can or cannot be physical units, in other words, can be located in one location, or can be distributed on a plurality of network units. Apart or all of the modules can be selected based on actual needs to achieve the objectives of the solutions of the present specification. A person of ordinary skill in the art can understand and implement the implementations of the present specification without creative efforts.

The system, apparatus, module, or unit illustrated in the previous implementations can be implemented by using a computer chip or an entity, or can be implemented by using a product having a certain function. A typical implementation device is a computer, and the computer can be a personal computer, a laptop computer, a cellular phone, a camera phone, a smartphone, a personal digital assistant, a media player, a navigation device, an email receiving and sending device, a game console, a tablet computer, a wearable device, or any combination of these devices.

Corresponding to the previous implementation of the smart broadcasting method, the present specification further provides another smart broadcasting apparatus. The apparatus includes a processor and a memory configured to store a machine executable instruction. The processor and the memory are usually connected to each other by using an internal bus. In another possible implementation, the device can further include an external interface, so as to communicate with another device or component.

In the present implementation, by reading and executing the machine executable instruction that is stored in the memory and that corresponds to smart broadcasting logic, the processor is configured to: in response to a request for binding a broadcast device, bind a device identifier of the broadcast device included in the request to a user account; process a payment request for the user account; and in response to determining that payment is completed, search for the device identifier bound to the user account, and send, based on the device identifier, a payment result to the broadcast device bound to the user account, so that the broadcast device outputs payment result audio.

Optionally, before the device identifier of the broadcast device included in the request is bound to the user account, the processor is further configured to: verify, based on the device identifier, whether the broadcast device is authorized; and in response to determining that the broadcast device is authorized, bind the device identifier of the broadcast device included in the request to the user account.

Optionally, by reading and executing the machine executable instruction that is stored in the memory and that corresponds to smart broadcasting logic, the processor is further configured to: receive device data reported by the broadcast device; determine, based on the device data, whether the broadcast device is at a security risk; and in response to determining that the broadcast device is at a security risk, unbind the broadcast device from the user account.

Optionally, the device data includes an operating system version number and a speaker firmware number.

Optionally, by reading and executing the machine executable instruction that is stored in the memory and that corresponds to smart broadcasting logic, the processor is further configured to: receive detected information reported by the broadcast device, where the detected information is detected by the broadcast device based on a Wi-Fi probe technology; obtain a push condition corresponding to the user account bound to the broadcast device; and send a push information audio to the broadcast device in response to determining that the detected information corresponds to the push condition, so that the broadcast device outputs the push information audio.

Optionally, the detected information includes a quantity of end-user devices and device information of each end-user device.

Optionally, by reading and executing the machine executable instruction that is stored in the memory and that corresponds to smart broadcasting logic, the processor is further configured to: in response to a binding query request sent after the broadcast device accesses a network, query whether the broadcast device is bound to the user account, and return a query result to the broadcast device, so that the broadcast device outputs a corresponding light prompt based on the query result.

The query result includes bound or unbound.

Optionally, after the device identifier of the broadcast device included in the request is bound to the user account, the processor is further configured to: send a binding success message to the broadcast device, so that the broadcast device outputs an audio indicating that the user account is successfully bound.

Corresponding to the previous implementation of the smart broadcasting method, the present specification further provides a computer readable storage medium. The computer readable storage medium stores a computer program, and when the program is executed by the processor, the following steps are implemented: in response to a request for binding a broadcast device, binding a device identifier of the broadcast device included in the request to a user account; processing a payment request for the user account; and in response to determining that payment is completed, searching for the device identifier bound to the user account, and sending, based on the device identifier, a payment result to the broadcast device bound to the user account, so that the broadcast device outputs payment result audio.

Optionally, before the binding a device identifier of the broadcast device included in the request to a user account, the following steps are included: verifying, based on the device identifier, whether the broadcast device is authorized; and in response to determining that the broadcast device is authorized, binding the device identifier of the broadcast device included in the request to the user account.

Optionally, the following steps are further included: receiving device data reported by the broadcast device; determining, based on the device data, whether the broadcast device is at a security risk; and in response to determining that the broadcast device is at a security risk, unbinding the broadcast device from the user account.

Optionally, the device data includes an operating system version number and a speaker firmware number.

Optionally, the following steps are further included: receiving detected information reported by the broadcast device, where the detected information is detected by the broadcast device based on a Wi-Fi probe technology; obtaining a push condition corresponding to the user account bound to the broadcast device; and sending a push information audio to the broadcast device in response to determining that the detected information corresponds to the push condition, so that the broadcast device outputs the push information audio.

Optionally, the detected information includes a quantity of end-user devices and device information of each end-user device.

Optionally, the following steps are further included: in response to a binding query request sent after the broadcast device accesses a network, querying whether the broadcast device is bound to the user account, and returning a query result to the broadcast device, so that the broadcast device outputs a corresponding light prompt based on the query result.

The query result includes bound or unbound.

Optionally, before the binding a device identifier of the broadcast device included in the request to a user account, the following step is included: sending a binding success message to the broadcast device, so that the broadcast device outputs an audio indicating that the user account is successfully bound.

Specific implementations of the present specification are described above. Other implementations fall within the scope of the appended claims. In some situations, the actions or steps described in the claims can be performed in an order different from the order in the implementations and the desired results can still be achieved. In addition, the process described in the accompanying drawings does not necessarily need a particular execution order to achieve the desired results. In some implementations, multitasking and parallel processing can be advantageous.

The previous descriptions are merely example implementations of the present specification, but are not intended to limit the present specification. Any modification, equivalent replacement, or improvement made without departing from the spirit and principle of the present specification should fall within the protection scope of the present specification.

## Claims

1. A smart broadcasting method, comprising:
in response to a request for binding a broadcast device, binding a device identifier of the broadcast device comprised in the request to a user account;
processing a payment request for the user account;
in response to determining that payment is completed, searching for the device identifier bound to the user account; and
sending, based on the device identifier, a payment result to the broadcast device bound to the user account, so that the broadcast device outputs payment result audio.

2. The method according to claim 1, before the binding a device identifier of the broadcast device comprised in the request to a user account, further comprising:
verifying, based on the device identifier, whether the broadcast device is authorized; and
in response to determining that the broadcast device is authorized, binding the device identifier of the broadcast device comprised in the request to the user account.

3. The method according to claim 1, further comprising:
receiving device data reported by the broadcast device;
determining, based on the device data, whether the broadcast device is at a security risk; and
in response to determining that the broadcast device is at a security risk, unbinding the broadcast device from the user account.

4. The method according to claim 3, wherein
the device data comprises an operating system version number and a speaker firmware number.

5. The method according to claim 1, further comprising:
receiving detected information reported by the broadcast device, wherein the detected information is detected by the broadcast device based on a Wi-Fi probe technology;
obtaining a push condition corresponding to the user account bound to the broadcast device; and
in response to determining that the detected information corresponds to the push condition, sending a push information audio to the broadcast device, so that the broadcast device outputs the push information audio.

6. The method according to claim 5, wherein the detected information comprises a quantity of end-user devices and device information of each end-user device.

7. The method according to claim 1, further comprising:
in response to a binding query request sent after the broadcast device accesses a network, querying whether the broadcast device is bound to the user account; and
returning a query result to the broadcast device, so that the broadcast device outputs a corresponding light prompt based on the query result, wherein the query result comprises bound or unbound.

8. The method according to claim 1, after the binding a device identifier of the broadcast device comprised in the request to a user account, further comprising:
sending a binding success message to the broadcast device, so that the broadcast device outputs an audio indicating that the user account is successfully bound.

9. A smart broadcasting method, comprising:
receiving a payment result for a user account sent by a payment system, wherein the payment result is sent after the payment system identifies a device bound to the user account; and
outputting payment result audio.

10. The method according to claim 9, further comprising:
when a specified key is triggered, switching to an AP mode for connection to an end-user device; and
receiving Wi-Fi connection information sent by the connected end-user device, and switching to a STA mode, so that the device accesses a corresponding Wi-Fi network based on the Wi-Fi connection information.

11. The method according to claim 9, further comprising:
reporting device data of the device to the payment system, so that the payment system unbinds the device from the user account in response to determining, based on the device data, that the device is at a security risk.

12. The method according to claim 11, wherein
the device data comprises an operating system version number and a speaker firmware number.

13. The method according to claim 11, further comprising:
detecting detected information of the end-user device based on a Wi-Fi probe technology;
encapsulating the detected information based on a predetermined protocol;
reporting the detected information to the payment system;
receiving a push information audio, wherein the push information audio is sent from the payment system when the payment system determines that the detected information corresponds to a push condition corresponding to the user account; and
outputting the push information audio.

14. The method according to claim 13, wherein
the detected information comprises a quantity of end-user devices and device information of each end-user device.

15. The method according to claim 9, further comprising:
after accessing a network, sending a binding query request to the payment system to query whether the device is bound to the user account;
receiving a query result returned by the payment system; and
when the query result is bound, outputting a first light drive signal to drive an LED status indicator to output a first light prompt; or
when the query result is unbound, outputting a second light drive signal to drive the LED status indicator to output a second light prompt different from the first light prompt.

16. The method according to claim 9, further comprising:
in response to detecting an end-user device having an NFC function, sending information comprised in a payment graphic code to the end-user device by using an NFC technology.

17. The method according to claim 9, wherein the payment result is a payment result parameter, and the outputting payment result audio comprises:
obtaining a locally stored basic audio, generating a payment result audio signal based on the basic audio and the payment result parameter; and
outputting the payment result audio signal.

18. A smart broadcasting apparatus, comprising:
a device binding unit, configured to: in response to a request for binding a broadcast device, bind a device identifier of the broadcast device comprised in the request to a user account;
a payment processing unit, configured to process a payment request for the user account; and
an audio output unit, configured to: in response to determining that payment is completed, search for the device identifier bound to the user account, and send, based on the device identifier, a payment result to the broadcast device bound to the user account, so that the broadcast device outputs payment result audio.

19. The apparatus according to claim 18, wherein
the device binding unit is further configured to verify, based on the device identifier, whether the broadcast device is authorized; and
in response to determining that the broadcast device is authorized, bind the device identifier of the broadcast device comprised in the request to the user account.

20. The apparatus according to claim 18, further comprising:
a risk determining unit, configured to: receive device data reported by the broadcast device;
determine, based on the device data, whether the broadcast device is at a security risk; and
in response to determining that the broadcast device is at a security risk, unbind the broadcast device from the user account.

21. The apparatus according to claim 20, wherein
the device data comprises an operating system version number and a speaker firmware number.

22. The apparatus according to claim 18, further comprising:
an audio pushing unit, configured to: receive detected information reported by the broadcast device, wherein the detected information is detected by the broadcast device based on a Wi-Fi probe technology;
obtain a push condition corresponding to the user account bound to the broadcast device; and
send a push information audio to the broadcast device in response to determining that the detected information corresponds to the push condition, so that the broadcast device outputs the push information audio.

23. The apparatus according to claim 22, wherein
the detected information comprises a quantity of end-user devices and device information of each end-user device.

24. The apparatus according to claim 18, further comprising:
a binding query unit, configured to: in response to a binding query request sent after the broadcast device accesses a network, query whether the broadcast device is bound to the user account, and return a query result to the broadcast device, so that the broadcast device outputs a corresponding light prompt based on the query result, wherein
the query result comprises bound or unbound.

25. The apparatus according to claim 18, wherein
the device binding unit, configured to send a binding success message to the broadcast device after the device identifier of the broadcast device comprised in the request is bound to the user account, so that the broadcast device outputs an audio indicating that the user account is successfully bound.

26. A smart broadcasting apparatus, comprising:
a processor; and
a memory, configured to store a machine executable instruction, wherein
by reading and executing the machine executable instruction that is stored in the memory and that corresponds to smart broadcasting logic, the processor is configured to:
in response to a request for binding a broadcast device, bind a device identifier of the broadcast device comprised in the request to a user account;
process a payment request for the user account; and
in response to determining that payment is completed, search for the device identifier bound to the user account, and send, based on the device identifier, a payment result to the broadcast device bound to the user account, so that the broadcast device outputs payment result audio.
